# EUROPÄISCHE PATENTSCHRIFT

(11) **EP 3 269 151 B1**
(45) Veröffentlichungstag und Bekanntmachung des Hinweises auf die Patenterteilung: **14.08.2019**
(21) Anmeldenummer: 16707030.9
(22) Anmeldetag: 23.02.2016
(51) Int. Cl.: H04R 5/04, G06F 3/16, G06F 11/30

(54) **AUDIOSTEUERUNG IN FAHRZEUGEN**
AUDIO CONTROL IN VEHICLES
COMMANDE AUDIO DANS VÉHICULES

(30) Priorität: 10.03.2015 DE 102015204203
(43) Veröffentlichungstag der Anmeldung: 17.01.2018
(73) Patentinhaber: Bayerische Motoren Werke Aktiengesellschaft, 80809 München (DE)
(72) Erfinder: TRAPP, Hannes, 80935 München (DE); URBINA CAZENAVE, Mario, 85276 Pfaffenhofen an der Ilm (DE)
(86) Internationale Anmeldenummer: PCT/EP2016/053775
(87) Internationale Veröffentlichungsnummer: WO 2016/142170

(56) Entgegenhaltungen:
- WO-A1-2008/070093
- US-A1- 2009 003 620
- US-B2- 8 583 292

## Beschreibung

Die Erfindung betrifft eine Audiovorrichtung für Fahrzeuge sowie ein Fahrzeug mit entsprechender Audiovorrichtung.

Heutzutage sind Fahrzeuge bekannt, die ein Rear Seat Entertainment umfassen, bei dem die Passagiere auf der Rücksitzbank Musik hören, Fernsehen oder Filme schauen können, oder Computerspiele spielen können. Das Rear Seat Entertainment bietet typischerweise zwei getrennte Systeme für den linken und rechten Passagier. Diese umfassen jeweils getrennte Quellen und getrennte Ausgabekanäle, was sowohl zwei Videoausgaben (Anzeigen wie LCD, LED oder OLED Displays) als auch zwei Audioausgaben umfasst. Die Audioausgabe des Rear Seat Entertainment wird dabei typischerweise durch das Lautsprechersystem das Fahrzeugs (bestehend aus drei oder mehr Lautsprechern) und/oder Kopfhörerbuchsen, an denen der Benutzer einen Kopfhörer anschließen kann, bewerkstelligt. Außerdem gibt es Funk-Kopfhörer. Dabei gibt es häufig für den linken und rechten Passagier der Rücksitzbank jeweils einen Kopfhöreranschluss. Dem linken und rechten Passagier steht jeweils mehrere Audioquelle zur Verfügung, deren Wiedergabeinhalt unabhängig vom Wiedergabeinhalt der anderen Audioquelle bestimmt werden kann. Die Audioquelle kann Musik (Hörbücher, Podcasts), der Ton eines Films, Fernsehsenders oder Computerspiels sein. Typischerweise ist in diesem System die eine Quelle (Musik, Radio, Film, TV) fest einer Senke (Anzeige und Kopfhörerbuchse) zugeordnet. Das heißt beispielsweise, dass die Wiedergabe eines Films für den linken Passagier stets auf der linken Anzeige und der linken Kopfhörerbuchse stattfindet. Allerdings gibt es Fälle, in denen eine andere Aufteilung wünschenswert wäre, beispielsweise, wenn der linke Passagier den Ausschnitt einer Radiosendung mit allen Passagieren des Fahrzeugs teilen möchte.

Dokument WO 2008/070093 A1 offenbart Systeme und Verfahren für Audio und Video Systeme für Fondsitze. Dokument US 8 583 292 B2 betrifft Systeme und Verfahren zum Beschränken des Zugriffs auf Fahrzeugsoftwaresysteme.

Der Erfindung liegt die Aufgabe zugrunde, eine leicht zu bedienende Benutzerschnittstelle zur Verteilung der Audioausgabe zwischen verschiedenen Audioquellen und -senken im Fahrzeug zur Verfügung zu stellen.

Die Aufgabe wird durch die Vorrichtung und das Fahrzeug gemäß den unabhängigen Ansprüchen gelöst. Vorteilhafte Weiterbildungen sind in den abhängigen Ansprüchen definiert.

Wir sprechen von Instanzen (RSE-links, RSE-rechts, CID-vorne), Quellen (USB, FM, Musikfestplatte, ...) und Senken (Kopfhörer links, Kopfhörer rechts, Lautsprecher)

In einem ersten Aspekt der Erfindung umfasst eine Audiovorrichtung für Fahrzeuge: Drei parallel spielende Audioquellen; Drei Audiosenken, umfassend zwei Kopfhöreranschlüsse und ein Lautsprechersystem; Eine berührungsempfindliche Anzeige; Wobei die Audiovorrichtung zur Ausführung der folgenden Schritte eingerichtet ist: Gleichzeitiges Wiedergeben der drei Audioquellen; Anzeigen je einer Repräsentation für die Audioquellen und Audiosenken auf der Anzeige; Erkennen einer Berührungseingabe; wobei die Berührungseingabe eine Bewegung eines Fingers des Benutzers auf der Anzeige umfasst; wobei die Bewegung auf der Repräsentation einer Start-Audioquelle beginnt und in Richtung einer Ziel-Audiosenke verläuft; In Antwort auf das Erkennen: Ausgeben der Start-Audioquelle auf der Ziel-Audiosenke. Eine berührungsempfindliche Anzeige wird häufig auch als Touch-Screen bezeichnet und hat die Eigenschaft die Berührung der Anzeige und den Ort der Berührung erkennen zu können. Die Kopfhöreranschlüsse dienen dazu, Stromsignale auszugeben, die von Kopfhörern in Schall umgewandelt werden können. Die Bewegung des Fingers auf der Anzeige kann auch als "Wisch-Bewegung" oder "Wisch-Geste" aufgefasst werden und ist im Stand der Technik bekannt.

Hierin wird also vorgeschlagen, Audioquellen und -senken des gesamten Fahrzeugs auf einer Anzeige graphisch darzustellen. Durch intuitives "Ziehen" von Audioquellen auf Audiosenken (oder zu Audiosenken hin) wird der Audioinhalt auf der gewünschten Audiosenke wiedergegeben. So kann beispielsweise die Radiosendung, die bisher von einem Passagier über dessen Kopfhörer gehört wurde, auf den Lautsprechern des ganzen Fahrzeugs wiedergegeben werden. Es wird eine getrennte Steuerung der Lautstärken ermöglicht. Ferner wird eine Übersicht über die momentan spielenden Quellen und die vorliegende Quellen- Senken-Beziehung gegeben.

Es kann vorgesehen sein, die aktuelle Zuordnung von Audioquellen und -senken durch graphische Verbindungen, beispielsweise durch Pfeile , eine Kabel/Stecker-Darstellung oder räumliche Nähe, auf der Anzeige darzustellen.

Typischerweise umfassen die Repräsentation der Audioquellen Informationen zum aktuell wiedergegebenen Audioinhalt, insbesondere Album-Cover oder zugehörige Bilder. Dies ermöglicht den Benutzern schnell die eigene Audioquelle zu erfassen.

In einer Implementierung werden neben den Repräsentationen der Audiosenken auf der Anzeige Schaltflächen zur Steuerung der Ausgabelautstärke angezeigt. Auf diese Weise kann der Benutzer auf der Anzeige nicht nur die Audiosenke wählen, sondern auch die Lautstärke der Wiedergabe intuitiv einstellen. Neben der Lautstärkeeinstellung kann für jede Audiosenke auch noch eine Schaltfläche zum Stummschalten angezeigt werden.

Vorteilhaft ist es, optional neben den Repräsentationen der Audiosenken auf der Anzeige Schaltflächen zur Steuerung des wiedergegebenen Audioinhalts, insbesondere des Musikstücks oder Radiosenders, anzuzeigen. Somit kann neben der Audioquelle auch der wiedergegebene Audioinhalt intuitiv gewählt werden. Diese Steuerung des Audioinhalts dient einem "Skip" zum nächsten Titel oder Sender innerhalb einer vorgewählten Gruppe von Titeln oder Sendern.

Ein anderer Aspekt der Erfindung betrifft ein Fahrzeug mit zwei hintereinander angeordneten Sitzreihen, umfassend die vorgehend beschriebene Audiovorrichtung, wobei die Anzeige an der Rückseite der ersten Sitzreihe angeordnet ist. Es handelt sich somit um ein Rear Seat Entertainment System in einem Fahrzeug.

### KURZE BESCHREIBUNG DER ZEICHNUNG

Fig. 1 zeigt schematisch die Anzeige einer Audiovorrichtung gemäß einem Ausführungsbeispiel in einem ersten Zustand.
Fig. 2 zeigt schematisch die Anzeige der Audiovorrichtung nach Fig. 1 in einem zweiten Zustand.

Gleiche Bezugszeichen beziehen sich auf sich entsprechende Elemente über die Figuren hinweg.

### DETAILLIERTE BESCHREIBUNG DES AUSFÜHRUNGSBEISPIELS

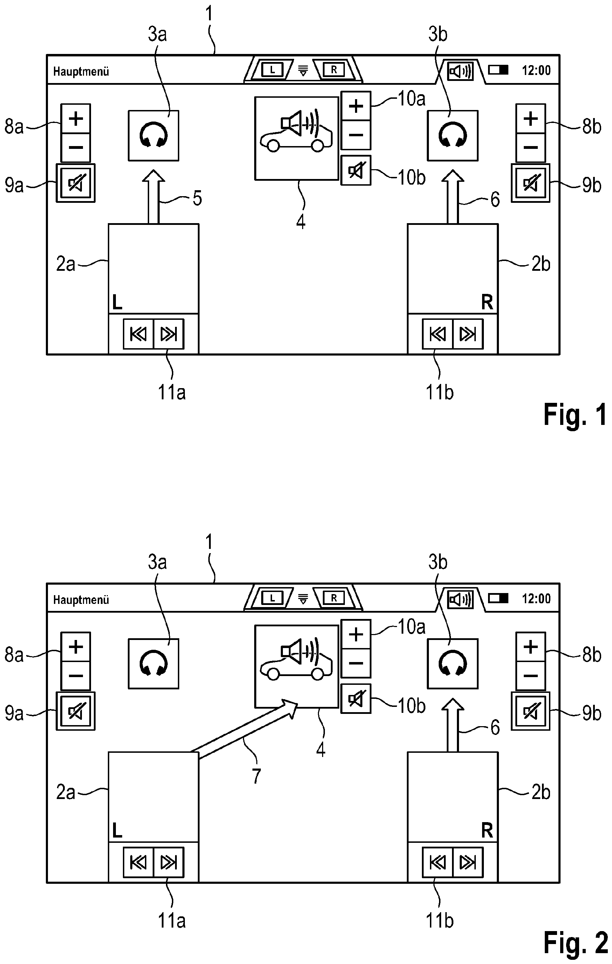

Fig. 1 zeigt schematisch die Anzeige 1 einer Audiovorrichtung gemäß einem Ausführungsbeispiel in einem ersten Zustand. Die Audiovorrichtung ist in einem Fahrzeug (nicht dargestellt) verbaut und umfasst ein Lautsprechersystem, das im Fahrzeug verteilt ist, und zwei Kopfhörer bzw. Kopfhörerbuchsen, jeweils eine für den linken und rechten Passagier auf der Rücksitzbank. Die Anzeige 1 ist als Touch-Screen ausgeführt und kann somit Berührungen mit einem Finger erfassen. Im dargestellten Zustand in Fig. 1 und 2 wurde vom linken Passagier ein erstes Album zur Musikwiedergabe gewählt. Das Cover dieses Albums wird als Repräsentation 2a der Audioquelle auf der Anzeige angezeigt. Das vom rechten Passagier gewählte Musikalbum wird als Repräsentation 2b der zweiten Audioquelle auf der Anzeige dargestellt. Unterhalb der Repräsentationen 2a und 2b werden jeweils zwei Schaltflächen 11a und 11b zur Titelwahl innerhalb des Albums angezeigt.

Die Anzeige 1 stellt weiterhin die Audiosenken dar, nämlich die linke Kopfhörerbuchse 3a, die rechte Kopfhörer bzw. Kopfhörerbuchse 3b und das Fahrzeuglautsprechersystem 4. Neben jeder dieser Senken sind Schaltflächen 8a, 8b und 10a zur Lautstärkeregelung dargestellt. Ebenfalls sind Schaltflächen 9a, 9b und 10b zum Stummschalten der jeweiligen Audiosenke angezeigt.

Im in Fig. 1 gezeigten Zustand ist die Wiedergabe der dem linken Passagier zugeordneten Audioquelle der linken Kopfhörerbuchse zugeordnet, was durch den graphischen Pfeil 5 dargestellt ist. Gleichzeitig ist der Kopfhörer bzw. die Kopfhörerbuchse stummgeschaltet, was durch die Hervorhebung der Schaltfläche 9a symbolisiert wird.

Zur Darstellung der aktuellen Zuordnung von Audioquellen und -senken werden die Pfeile 5 und 6 auf der Anzeige 1 dargestellt.

Im Betrieb möchte der linke Passagier (obwohl auch der rechte Passagier diese Funktion ausführen könnte), die Wiedergabe der linken Audioquelle auf dem Fahrzeuglautsprechersystem initiieren. Dazu berührt der Benutzer die Repräsentation 2a oder 5 mit dem Finger auf der Anzeige und bewegt ("wischt") den Finger in Richtung der Repräsentation 4 des Fahrzeuglautsprechersystems. Dies wird von der Audiovorrichtung erkannt und die Audioausgabe der linken Audioquelle auf dem Fahrzeuglautsprechersystem gestartet. Diese neue Zuordnung wird durch die Veränderung des Zuordnungspfeils angezeigt. Der neue Pfeil 7 (siehe Fig. 2) zeigt nun an, dass die linke Audioquelle auf dem Lautsprechersystem des Fahrzeugs wiedergegeben wird.

## Patentansprüche

1. Audiovorrichtung für Fahrzeuge, umfassend:
Zwei Audioquellen;
Drei Audiosenken, umfassend zwei Kopfhöreranschlüsse und ein Lautsprechersystem;
Eine berührungsempfindliche Anzeige;
Wobei die Audiovorrichtung zur Ausführung der folgenden Schritte eingerichtet ist:
Gleichzeitiges Wiedergeben der zwei Audioquellen;
Anzeigen je einer Repräsentation für die Audioquellen und Audiosenken auf der Anzeige;
Erkennen einer Berührungseingabe;
In Antwort auf das Erkennen: Ausgeben der Start-Audioquelle auf der Ziel-Audiosenke;
**dadurch gekennzeichnet,**
**dass** die Berührungseingabe eine Bewegung eines Fingers des Benutzers auf der Anzeige umfasst; wobei die Bewegung auf der Repräsentation einer Start-Audioquelle beginnt und in Richtung einer Ziel-Audiosenke verläuft; und
**dass** die Repräsentation der Audioquellen Informationen zum aktuell wiedergegebenen Audioinhalt umfasst, insbesondere Album-Cover oder zugehörige Bilder.

2. Audiovorrichtung nach einem der vorhergehenden Ansprüche, wobei neben den Repräsentationen der Audiosenken auf der Anzeige Schaltflächen zur Steuerung der Ausgabelautstärke angezeigt werden.

3. Audiovorrichtung nach einem der vorhergehenden Ansprüche, wobei neben den Repräsentationen der Audiosenken auf der Anzeige Schaltflächen zur Steuerung des wiedergegebenen Audioinhalts, insbesondere des Musikstücks oder Radiosenders, angezeigt werden.

4. Audiovorrichtung nach einem der vorhergehenden Ansprüche, wobei durch graphische Verbindungen die aktuelle Zuordnung zwischen Audioquellen und Audiosenken auf der Anzeige dargestellt wird.

5. Fahrzeug mit zwei hintereinander angeordneten Sitzreihen, umfassend die Audiovorrichtung nach einem der vorhergehenden Ansprüche, wobei die Anzeige an der Rückseite der vorderen Sitzreihe angeordnet ist.

## Claims

1. An audio device for vehicles, comprising:
two audio sources;
three audio sinks, comprising two headphone connections and a speaker system;
a touch-sensitive display;
wherein the audio device is configured to carry out the following steps:
simultaneous playing back of the two audio sources;
displaying a representation for each of the audio sources and audio sinks on the display;
detecting a touch input;
in response to the detection: outputting the origin audio source on the target audio sink;
**characterised in that**
the touch input comprises a motion of the user's finger on the display, wherein the motion starts on the representation of an origin audio source and extends in the direction of a destination audio sink, and **in that** the representation of the audio sources comprises information concerning the audio content currently being played back, more especially album cover or associated images.

2. An audio device according to the preceding claim, wherein, beside the representations of the audio sinks on the display, switching areas for controlling the output volume are displayed.

3. An audio device according to either one of the preceding claims, wherein, beside the representations of the audio sinks on display, switching areas for controlling the played-back audio content, more especially the music item or radio station, are displayed.

4. An audio device according to any one of the preceding claims, wherein the current assignment between audio sources and audio sinks is displayed on the display by graphic connections.

5. A vehicle with two rows of seats arranged one behind the other, comprising the audio device according to any one of the preceding claims, wherein the display is arranged on the rear side of the front row of seats.

## Revendications

1. Dispositif audio destiné à un véhicule comprenant :
deux sources audio,
trois collecteurs audio comprenant deux connecteurs de casque d'écouteur, et un système de haut-parleur,
un affichage sensible au contact,
ce dispositif audio étant réalisé pour effectuer les étapes suivantes consistant à :
reproduire simultanément les deux sources audio,
afficher respectivement une représentation des sources audio et des collecteurs audio sur l'affichage,
identifier une saisie tactile,
en réponse à l'identification délivrer la source audio de départ sur le collecteur audio cible,
**caractérisé en ce que**
la saisie tactile comprend un mouvement d'un doigt de l'utilisateur sur l'affichage, le mouvement commençant sur la représentation d'une source audio de départ et s'étendant en direction d'un collecteur audio cible, et
la représentation des sources audio comprend des informations concernant le contenu audio actuellement reproduit, en particulier une couverture d'album ou des images associées.

2. Dispositif audio conforme à la revendication précédente,
dans lequel, outre les représentations des collecteurs audio sont indiquées sur l'affichage des surfaces de commutation permettant la commande des volumes de sortie.

3. Dispositif audio conforme à l'une des revendications précédentes,
dans lequel, outre les représentations des collecteurs audio sont affichées sur l'affichage des surfaces de commutation permettant la commande des contenues audio reproduits, en particulier des morceaux de musique ou des émetteurs radio.

4. Dispositif audio conforme à l'une des revendications précédentes,
dans lequel, l'association actuelle entre les sources audio et les collecteurs audio est représentée sur l'affichage par des liaisons graphiques.

5. Véhicule comportant deux rangées de sièges situées l'une derrière l'autre comprenant un dispositif audio conforme à l'une des revendications précédentes,
l'affichage étant situé sur la face arrière de la rangée de sièges avant.
